# EUROPEAN PATENT APPLICATION

(11) **EP 3 364 356 A1**
(43) Date of publication of application: **22.08.2018**
(21) Application number: 18152257.4
(22) Date of filing: 18.01.2018
(51) Int. Cl.: G06Q 20/18, G06Q 20/20, G07G 1/14, G07G 1/00

(54) **CHECKOUT SYSTEM**

(30) Priority: 20.02.2017 JP 2017029438
(71) Applicant: Toshiba TEC Kabushiki Kaisha, Tokyo 141-8562 (JP)
(72) Inventor: HARAGUCHI, Takeshi, Shinagawa-ku,, Tokyo 141-8562 (JP)
(74) Representative: Takeuchi, Maya

(57) **Abstract**

A checkout system includes a registration apparatus for registering items in a sales transaction, a first settlement apparatus through which settlement processing of a first type can be performed, and a second settlement apparatus through which settlement processing of a second type can be performed. The registration apparatus is configured to designate a settlement method type for the registered sales transaction as one of the first type or second type and to transmit transaction information to the first or second settlement apparatus according to the designated settlement method type.

## Description

### FIELD

Embodiments described herein relate generally to a checkout system.

### BACKGROUND

At present, there are normal transaction registers with which a store clerk performs sales registration of items being sold and also a self-service register with which a shopper personally performs the registration of items being sold. Recently, a checkout system of a semi-self-service type has been developed with which a store clerk and a store customer share tasks in the sales registration process and may perform these tasks in parallel with each other in such a manner that the store clerk performs item registration, which is more likely to require specialized proficiency, and the customer performs the relatively easy settlement/payment steps.

With a semi-self-service checkout system, one or more settlement apparatus can be provided for each registration apparatus. In general, the settlement apparatus is capable of performing transaction settlement using cash or electronic methods.

When the settlement is made with cash, the customer must take cash from a wallet or the like and then deposit the cash in the settlement apparatus and then collect the change if any. These steps may be referred to as cash settlement related work. When settlement is made with cash, there is a tendency for customer dwell time at the settlement apparatus to be higher than with other methods. On the other hand, if the electronic settlement is performed, since the cash settlement related work is not performed, it is typically possible for the customer to more quickly finish the settlement process.

However, in conventional checkout systems, since a shopper that will be performing a cash settlement and a shopper that will be performing an electronic settlement may share a settlement apparatus, there may be instances when a shopper that will be performing an electronic settlement will be in line behind a shopper performing a cash settlement and thus must wait for the completion of the cash settlement process. Therefore, in a conventional checkout system, the potential speed that might be provided by electronic settlement is sometimes compromised. Therefore the efficiency of entire settlement processing is deteriorated.

### SUMMARY OF INVENTION

To solve the above-cited problems, there is provided a checkout system, comprising:
a registration apparatus for registering items in a sales transaction;
a first settlement apparatus through which settlement processing of a first type can be performed for items registered in the sales transaction by the registration apparatus; and
a second settlement apparatus through which settlement processing of a second type can be performed for items registered in the sales transaction by the registration apparatus, wherein
the registration apparatus is configured to:
   designate a settlement method type for the sales transaction as one of the first type or second type, and
   transmit sales transaction information to the first or second settlement apparatus according to the designated settlement method type.

In an exemplary embodiment the registration apparatus preferably may be placed at an entrance to a first area in which the first settlement apparatus and the second settlement apparatus are disposed.

Preferably the checkout system according to the embodiment is further characterized in that:
the first settlement apparatus is disposed in a first region of the first area,
the second settlement apparatus is disposed in a second region of the first area, and
the first and second regions of the first area are distinguished from each other by at least one of signage or color scheme.

In the embodiment a floor of the first area in the first region preferably may have a color that is different from a color of the floor in the second region.

In the embodiment the first settlement apparatus and the second settlement apparatus preferably may be each disposed at an exit of the first area.

In the embodiment the first settlement apparatus preferably may include a gate apparatus which opens with completion of settlement processing.

Preferably the checkout system according to the embodiment is further characterized in that:
the first type of the settlement method is cash payment, and
the second type of the settlement method is electronic payment.

In the embodiment the electronic payment preferably may include credit card processing.

In the embodiment the second settlement apparatus preferably may be a customer-operated settlement apparatus.

In the embodiment the first settlement apparatus preferably may be a customer-operated settlement apparatus.

In the embodiment the first settlement apparatus preferably may be a clerk-operated settlement apparatus.

In another exemplary embodiment there is also provided a sales registration apparatus for use in a checkout system with multiple settlement options, comprising:
a clerk-operable sales transaction register;
a communication interface connectable to a first settlement apparatus and a second settlement apparatus; and
a settlement-type designation device configured to accept an input designating a settlement type for settling a sales transaction recorded by the clerk-operable sales transaction register, wherein
the clerk-operable sales transaction register is configured to transmit, via the communication interface, information for settling the sales transaction to one of the first settlement apparatus or the second settlement apparatus according to the input designating the settlement type.

Preferably the sales registration apparatus according to the embodiment is further characterized in that:
the first settlement apparatus is configured to process cash payments, and
the second settlement apparatus is configured to process electronic payments.

In the embodiment the settlement-type designation device preferably may include a touch panel that faces a customer standing area at the clerk-operable transaction register.

In the embodiment the settlement-type designation device preferably may include a button or key on the clerk-operable sales transaction register that is operable by a clerk at the clerk-operable sales transaction register.

In yet another exemplary embodiment there is also provided a checkout system, comprising:
a sales transaction register apparatus according to claim 12;
a first settlement apparatus configured to accept cash payment for sales transaction settlement;
a second settlement apparatus configured to accept electronic payment for sales transaction settlement; and
a communication network connecting the sales transaction register apparatus to the first settlement apparatus and the second settlement apparatus, wherein
the sales transaction register apparatus is in a first area of a retail store, the first settlement apparatus is in a first region of the first area, and the second settlement apparatus is in a second region of the first area that is distinguished from the first region.

In the embodiment the first area preferably may be at least partially separated from other areas of the retail site by customer bagging tables.

The checkout system according to the embodiment preferably may further comprise a first plurality of settlement apparatuses configured to accept cash payment and a second plurality of settlement apparatuses configured to accept electronic payment, each settlement apparatus in the first and second pluralities being connected to the sales transaction register apparatus via the communication network.

In yet another exemplary embodiment there is also provided a checkout system, comprising:
a plurality of sales transaction register apparatuses according to claim 12;
a first plurality of settlement apparatuses of a first type configured to accept cash payment for sales transaction settlement;
a second plurality of settlement apparatuses of a second type configured to accept electronic payment for sales transaction settlement; and
a communication network connecting the plurality of sales transaction register apparatuses to the first plurality of settlement apparatuses, and the second plurality of settlement apparatuses, wherein
the plurality of sales transaction register apparatuses is in a first area of a retail store, the first plurality of settlement apparatuses is in a first region of the first area, and the second plurality of settlement apparatuses is in a second region of the first area distinguished from the first region by at least one of signage or color.

Preferably the checkout system according to the embodiment is further characterized in that:
the plurality of sales transaction register apparatuses is disposed at an entrance to the first area, and
the first and second pluralities of settlement apparatuses are disposed at an exit to the first area.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a diagram depicting an example configuration of a checkout system according to a first embodiment.
FIG. 2 is a perspective view showing an example of the exterior of a commodity data registration apparatus according to the first embodiment.
FIG. 3 is a perspective view showing an example of the exterior of a settlement apparatus according to the first embodiment.
FIG. 4 is a block diagram depicting hardware configurations of a commodity data registration apparatus and a settlement apparatus.
FIG. 5 is a block diagram depicting functional configurational aspects of a commodity data registration apparatus and a settlement apparatus.
FIG. 6 is a diagram depicting an example configuration of a checkout system according to a second embodiment.
FIG. 7 is a perspective view showing an example of the exterior of a settlement apparatus according to the second embodiment.

### DETAILED DESCRIPTION

In general, a checkout system according to one embodiment includes a registration apparatus for registering items in a sales transaction, a first settlement apparatus through which settlement processing of a first type can be performed for items registered in the sales transaction by the registration apparatus, and a second settlement apparatus through which settlement processing of a second type can be performed for items registered in the sales transaction by the registration apparatus. The registration apparatus is configured to designate a settlement method type for the sales transaction as one of the first type or second type, and to transmit sales transaction information to the first or second settlement apparatus according to the designated settlement method type.

Checkout systems according to example embodiments of the present disclosure are explained with reference to the drawings. In the example embodiments a checkout system of the present disclosure is applied to a store, such as a supermarket that sells commodity items such as groceries. However, the present disclosure is not limited to these particular examples.

### First Embodiment

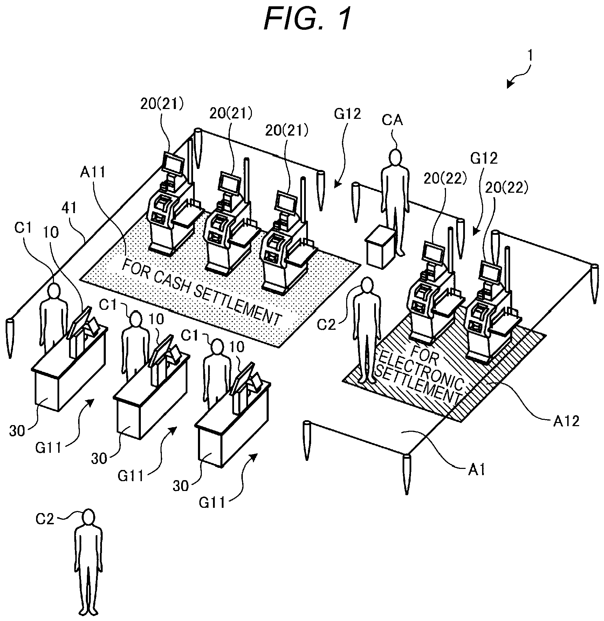

FIG. 1 is a diagram schematically showing a checkout system 1 according to a first embodiment. The checkout system 1 is provided in an area A1 where checkout, corresponding to the process of item registration (listing) of the commodities to be included in a sales transaction and transaction settlement (payment), is performed in a store.

Partitioning members 41, such as ropes or partitions, are set on the periphery of the area A1. Entry to and exit from the area A1 is possible through gates G11 and G12. That is, the area A1 is partitioned or delineated from other areas of the store by the partitioning members 41. Note that, in FIG. 1, the area A1 is rectangular. However, the shape of the area A1 is not limited to this.

The checkout system 1 includes commodity data registration apparatuses 10 operated by checkers C1, such as store clerks, and settlement apparatuses 20 operated by shoppers C2, which in some contexts may also be referred to as store customers.

The commodity data registration apparatuses 10 are set on work tables 30 having a rectangular shape. The work tables 30 are in an outer edge part of the area A1 and server to form the gates G11 for entering the area A1. In FIG. 1, the work tables 30 are disposed in parallel such that the gaps between work tables 30 form passages (gates G11) into the area A1. Note that, in FIG. 1, an example in which three work tables 30 (each respectively including a commodity data registration apparatuses 10 thereon) is shown. However, the number of work tables 30 (and/or commodity data registration apparatus 10) is not limited to this number.

Each settlement apparatus 20 executes settlement processing according to the commodities registered by one of the commodity data registration apparatuses 10. A plurality of settlement apparatuses 20 are provided inside of the area A1. The settlement apparatuses 20 are further classified into settlement apparatuses 21 for settlement by cash (cash settlement process) and settlement apparatuses 22 for settlement by electronic money (electronic settlement process). Note that, in this first embodiment, the settlement apparatuses 21 and the settlement apparatuses 22 have substantially similar structural configurations. When the settlement apparatuses 21 and the settlement apparatuses 22 are not required to be distinguished from each other in the following description, the settlement apparatuses 21 and the settlement apparatuses 22 may be collectively referred to as settlement apparatuses 20.

The settlement apparatuses 21 and the settlement apparatuses 22 are set in areas different from each in the area A1. Specifically, the settlement apparatuses 21 are set in an area A11 for cash settlement processing; and the settlement apparatuses 22 are set in an area A12 for electronic settlement processing. For example, as depicted in FIG. 1, it is desirable that the area A11 and the area A12 can be distinguished from each other by, for example, identifiable floor surface differences, such as by colors and/or displaying of guide messages on the floor surfaces or the like. Note that, in FIG. 1, an example is shown in which a total of five settlement apparatuses 20 (three settlement apparatuses 21 and two settlement apparatuses 22) are provided. However, the number of settlement apparatuses 20 and the ratio of the settlement apparatuses 21 to the settlement apparatuses 22 are not limited to this.

Gates G12 for exiting from the area A1 are provided in an outer edge part of the area A1. The position at which the gates G12 are provided does not particularly matter. However, the position for gates G12 may desirably a position distant from the commodity data registration apparatuses 10 (or the gates G11)). Note that, in FIG. 1, for the prevention a dishonest action, for example, exiting of the area A1 without payment, a store attendant CA can be stationed near the gates G12. However, this store attendant CA is optional.

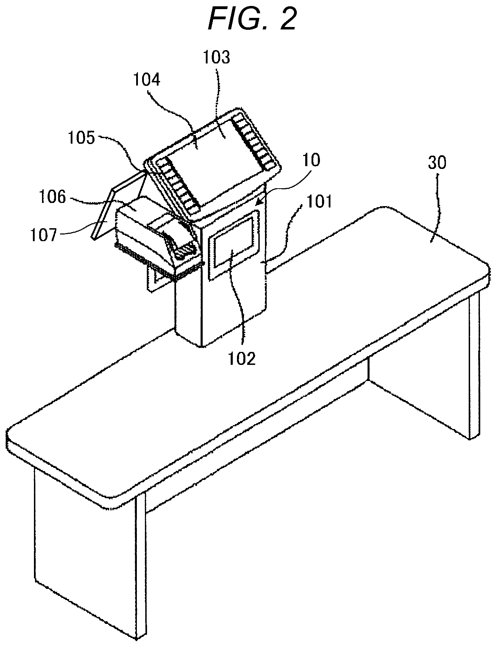

FIG. 2 is a perspective view showing an example of the exterior of the commodity data registration apparatus 10. As shown in FIG. 2, the commodity data registration apparatus 10 is set on the upper surface of the work table 30 and includes a scanner 101 including a reading window 102. Within the scanner 101, an imaging section is disposed on the inner side of the reading window 102.

The commodity data registration apparatus 10 includes a display 104 attached to a touch panel 103 and a keys 105 above the scanner 101. A commodity name, a price, and the like can be displayed on the display 104 according to information provided by scanner 101 for each commodity. The touch panel 103 and the keys 105 assist in the input of commodity data.

A printer 106 is provided on the left side of the commodity data registration apparatus 10 when viewed from the checker C1 side. The printer 106 issues a receipt on which identification data and transaction data such as a total amount for the sales transaction are printed.

In addition, a customer-side display 107 for a shopper C2 is provided on the left side of the commodity data registration apparatus 10 when viewed from the checker C1 side.

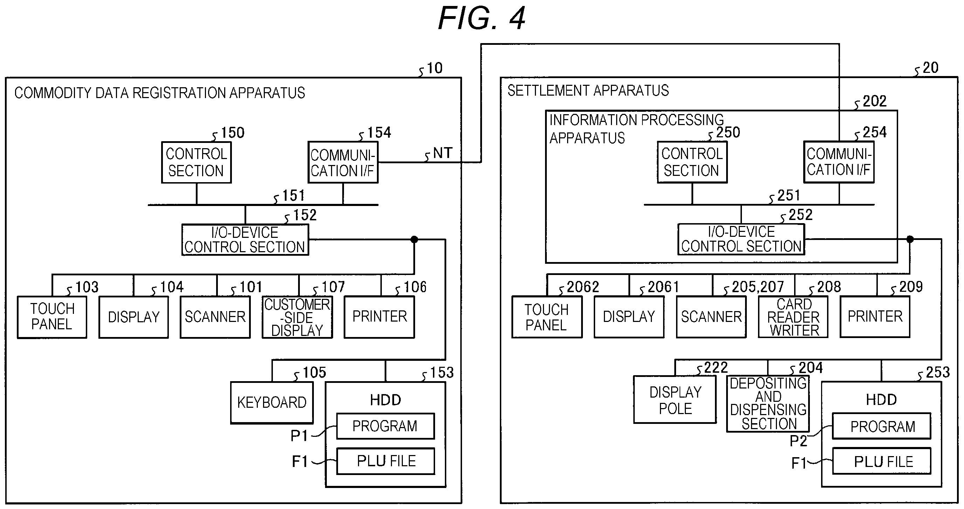

The commodity data registration apparatus 10 identifies a commodity by reading of a code symbol such as a barcode or a QR code® attached to the commodity or by generic object recognition in an image captured by the imaging section. In this example, the commodity data registration apparatus 10 references a PLU file F1 (see FIG. 4) storing commodity codes for commodities sold in the store in conjunction with corresponding commodity names, prices, and the like.

Note that, a generic object recognition technique that may be adopted in commodity data registration apparatus 10 for identifying commodities by means other than code symbol reading is explained in the following literature: Keiji Yanai, "Present Situation and Future of Generic Object Recognition", Information Processing Society Proceeding, Vol. 48, No. SIG16 [searched on January 6, 2016], Internet <URL: http://mm.cs.uec.ac.jp/IPSJ-TCVIM-Yanai.pdf>

Subsequently, the commodity data registration apparatus 10 displays, on the display 104, a screen for receiving input for confirming the commodity identification, the number of the commodity, and the like. The commodity data registration apparatus 10 stores the clerk's input along with other information concerning the sales registration, such as a commodity classification, a commodity name, and a unit price of the commodity in a sales master file or the like as sales data and performs the sales registration on the basis of commodity information such as a commodity code.

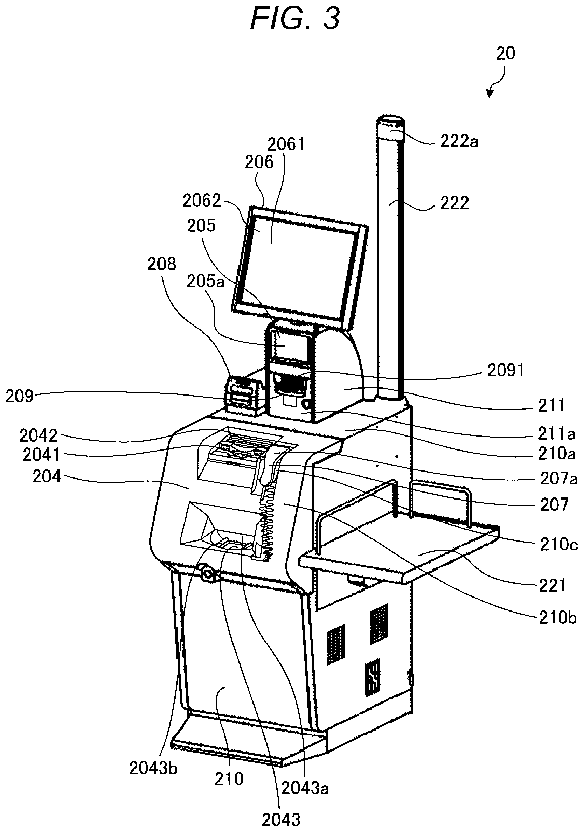

FIG. 3 is a perspective view showing an example of the exterior of a settlement apparatus 20. The settlement apparatus 20 includes a depositing and dispensing section 204, a fixed scanner 205, a display operation panel 206, a hand scanner 207, a card reader writer 208, a printer 209, a first housing 210, and a second housing 211. The first housing 210 is formed in a generally box-like shape and incorporates an information processing apparatus 202 (see FIG. 4), the depositing and dispensing section 204, and the like. The second housing 211 is an outer shell of the fixed scanner 205 and the printer 209 and is on an upper surface 210a of the first housing 210.

The fixed scanner 205 includes an imaging window 205a provided above the first housing 210 and an imaging section incorporated in the first housing 210. The imaging section can be used to capture a code symbol image such as a barcode on an item held up in front of the imaging window 205a and the captured code symbol can then be decoded. Here, the imaging section of the fixed scanner 205 outputs decoded code information to the information processing apparatus 202.

The hand scanner 207 is disposed in an upper part of a front surface 210b of the first housing 210. A retaining section 210c that retains a distal end portion 207a of the hand scanner 207 in a hooked state is provided at a right upper part of the front surface 210b of the first housing 210.

The display operation panel 206 includes a display 2061 and a touch panel 2062 and is placed on top of the second housing 211. The display 2061 displays an image according to control by the information processing apparatus 202. The touch panel 2062 is provided on a display surface of the display 2061 and outputs information based on a touched screen position to the information processing apparatus 202.

The card reader writer 208 is disposed beside the second housing 211 and on the upper surface 210a of the first housing 210. The card reader writer 208 reads information from and/or writes information to a card-type medium. Note that, the card-type medium may be a credit card or an electronic money card of a prepaid type or a post-pay type that is inserted into the card reader writer 208, whereby it is possible to perform electronic settlement on the basis of information provided by the card-type medium.

The depositing and dispensing section 204 includes a money depositing port 2041, a bill dispensing port 2042, and a coin dispensing section 2043. The coin dispensing section 2043 includes a dispensing port 2043a and a receiving tray 2043b. The depositing and dispensing section 204 receives, sorts, and stores bills and coins deposited into the money depositing port 2041. The depositing and dispensing section 204 dispenses change from the dispensing port 2043a according to a request of the information processing apparatus 202. The receiving tray 2043b receives the dispensed change. Note that, in a settlement apparatus 21, it is possible to perform cash settlement on the basis of cash deposited into the money deposing port 204.

The printer 209 provides a printing section within the second housing 211 and a receipt issue port 2091 on a front surface 211a of the second housing 211. The printer 209 issues a printed receipt from the receipt issue port 2091.

The information processing apparatus 202 is incorporated in the first housing 210 and provides overall control of the settlement apparatus 20. The information processing apparatus 202 outputs information, which the information processing apparatus 202 causes the display 2061 of the display operation panel 206 to display, and acquires information according to operations performed by the shopper C2 on the touch panel 2062. Further, the information processing apparatus 202 handles the depositing to and dispensing from the depositing and dispensing section 204.

The settlement apparatus 20 includes a basket placing table 221 on one side of the first housing 210. The basket placing table 221 permits the shopper C2 to place an object, such as a shopping basket, on the basket table during settlement processing.

Further, in the settlement apparatus 20, a display pole 222 that indicates a present state of the settlement apparatus 20 is erected on the upper surface 210a of the first housing 210. The display pole 222 includes, at the distal end portion, a light emitting section 222a that selectively emits light in blue or red, for example.

Hardware configurations of the commodity data registration apparatus 10 and the settlement apparatus 20 are explained. FIG. 4 is a block diagram showing an example of the hardware configurations of the commodity data registration apparatus 10 and the settlement apparatus 20.

As shown in FIG. 4, the commodity data registration apparatus 10 includes a control section 150 configured on a computer having a CPU (Central Processing Unit) operationally connected to a ROM (Read Only Memory) and a RAM (Random Access Memory), which are storage media. The ROM stores various computer programs to be executed by the CPU and various data. The RAM temporarily stores data and the computer programs when the CPU is executing the various computer programs. The RAM stores sales data (transaction data) indicating sales records of commodities and various screen display data which is displayed on the display 104.

The control section 150 is connected to the scanner 101, the touch panel 103, the display 104, the keys 105, the printer 106, the customer-side display 107, a HDD (Hard Disk Drive) 153, a communication interface (I/F) 154, and the like via a bus 151 and an I/O (Input/Output)-device control section 152.

A computer program P1 that is executable by the CPU of the control section 150 and the PLU file F1 are each stored in the HDD 153. The PLU file F1 is a file that stores commodity codes, uniquely allocated to particular commodities, in association with commodity information such as product names, item prices, and commodity classifications. If the commodities are being specified by the generic object recognition, the PLU file F1 may also store relevant commodity feature values such as item colors and surface textures to be read from commodity images for object recognition.

Note that the computer program P1 can be provided as recorded in a computer-readable, non-volatile recording medium such as a CD-ROM, a flexible disk (FD), a CD-R, or a DVD (Digital Versatile Disk) as a file in an installable format or an executable format. The computer program P1 may be stored on a computer connected to a network, such as the Internet, and downloaded through this network. The computer program P1 may also be provided or distributed through a network, such as the Internet.

The control section 150 can communicate with a store server (not shown in the figure) as well as the settlement apparatus 20 through the network NT, which may be, for example, a LAN (Local Area Network) via the communication I/F 154. The store server generally performs overall management of registration processing performed in the commodity data registration apparatus 10 and settlement processing performed in the settlement apparatus 20.

The settlement apparatus 20 includes, as part of the information processing apparatus 202, a control section 250 configured on a computer including a CPU operationally connected to a ROM and a RAM and the like. The ROM stores various computer programs executed by the CPU and various data. The RAM temporarily stores the data and the computer programs when the CPU executes the various computer programs and stores sales data indicating sales records of commodities and various screen display data displayed on the display 2061.

The control section 250 is connected to the display 2061, the touch panel 2062, the fixed scanner 205, the hand scanner 207, the card reader writer 208, the printer 209, the depositing and dispensing section 204, the display pole 222, a HDD 253, a communication I/F 254, and the like via a bus 251 and an I/O-device control section 252.

The card reader writer 208 reads information of a card-type medium for electronic settlement/payment. The card-type medium may be, for example, customer rewards or points card or a credit/debit card of the shopper C2 inserted at a card insertion port. The printer 209 prints a receipt after the settlement processing and issues the receipt from the receipt issue port 2091. The depositing and dispensing section 204 processes bills and coins deposited into the money depositing port 2041. The depositing and dispensing section 204 dispenses change from the dispensing port 2043aas necessary.

A computer program P2 executable by the control section 250 and the PLU file F1 are each stored in the HDD 253.

Note that the computer program P2 can be provided as recorded in a non-volatile computer-readable recording medium such as a CD-ROM, a flexible disk (FD), a CD-R, or a DVD as a file in an installable format or an executable format. The computer program P2 may be stored on a computer connected to a network, such as the Internet, and downloaded through this network. The computer program P2 may be provided or distributed through a network such as the Internet.

The control section 250 can communicate with the store server (not shown in the figure) and the commodity data registration apparatus 10 through the network NT via the communication I/F 254.

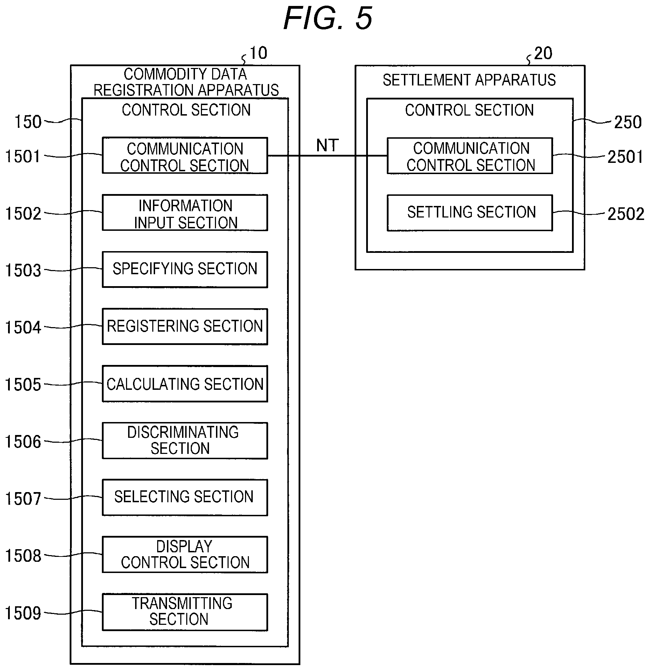

An operational configuration implemented by the CPU of the control section 150executing the computer program P1 and an operational configuration implemented by the CPU of the control section 250 the computer program P2 are explained with reference to FIG. 5.

FIG. 5 is a block diagram showing an example of configurations of the commodity data registration apparatus 10 and the settlement apparatus 20. As shown in FIG. 5, the control section 150 executes the computer program P1 stored by the HDD 153 to thereby provide a communication control section 1501, an information input section 1502, a specifying section 1503, a registering section 1504, a calculating section 1505, a discriminating section 1506, a selecting section 1507, a display control section 1508, and a transmitting section 1509.

Similarly, the control section 250 executes the computer program P2 stored by the HDD 253 to thereby provide a communication control section 2501 and a settling section 2502.

The communication control section 1501 controls communication with the settlement apparatus 20 through the network NT via the communication I/F 154.

The information input section 1502 receives identification information for identifying commodities involved in the sales transaction. More specifically, the information input section 1502 receives identification information such as code information and/or a commodity image that has been output from the scanner 101.

The specifying section 1503 specifies or selects a particular commodity on the basis of the received identification information. More specifically, if code information is received from the scanner 101, the specifying section 1503 identifies the commodity corresponding to the commodity code by referring to the PLU file F1. If a commodity image is received from the scanner 101, the specifying section 1503 identifies the commodity using generic object recognition to recognize the particular commodity (or commodities) included in the received image.

The registering section 1504 records sales data corresponding to the content of the commercial transaction, such as the product identification and total number of the product being purchased. More specifically, the registering section 1504 acquires information related to the specified commodity, such as a commodity classification, a commodity name, and a unit price and along with an entered number being purchased, and registers this information as sales data.

If a transaction closing operation (e.g., pressing of a subtotal key) is input from the touch panel 103 or the keys 105 and a closing of the commercial transaction is declared, the calculating section 1505 calculates a total amount due on the basis of the registered sales data.

The discriminating section 1506 identifies a settlement method selection for the sales transaction just registered by the registering section 1504. That is, the discriminating section 1506 receives input according to a choice of a settlement method by the shopper C2 for purchasing the commodities in the sales transaction. In particular, the discriminating section 1506 identifies whether cash settlement or electronic settlement has been selected by the shopper C2.

The method for determining or identifying the settlement method selected by the shopper C2 does not particularly matter. It is possible to adopt various forms. For example, the discriminating section 1506 may identify a settlement method via inputs to the touch panel 103 or the keys 105. In such a case, the checker C1 may input, via the touch panel 103 or the keys 105, a selection that was made orally by the shopper C2. The shopper C2 may also manually input a settlement method selection via a touch panel, or the like, provided with the customer-side display 107.

In other examples, the discriminating section 1506 may determine the shopper C2's selection of a settlement method on the basis the shopper C2's particular selection of a settlement apparatus 20. That is, the shopper C2 makes a selection by moving to one or the other of a settlement apparatus 21 or a settlement apparatus 22. In this case, the checkout system 1 is configured identify to which sub-type of settlement apparatus 20 (settlement apparatus 21 or a settlement apparatus 22) each shopper C2 moves to after initial registration. The underlying configuration for identifying shopper C2's destination/selection does not particularly matter and any known technique can be used for this purpose.

For example, a configuration may be adopted in which the position of the shopper C2 within the area A1 is specified by using a face authentication technique on a facial image of the shopper C2 imaged by a camera. In this case, cameras that image the face of the shopper C2 can be provided in each of the commodity data registration apparatus 10 and the settlement apparatus 20. The destination/selection of a particular settlement apparatus 20 of the shopper C2 after sales transaction registration at the commodity data registration apparatus 10 can be specified by collating facial images captured at both a commodity data registration apparatus 10 and a settlement apparatus 20.

In other examples, a configuration may be adopted in which a transaction number, or the like, is issued to the shopper C2 at the commodity data registration apparatus 10 and this transaction number is then supplied by shopper C2 at the shopper-selected settlement apparatus 20. In this case, the commodity data registration apparatus 10 may issue a receipt to shopper C2 on which the transaction number is printed in a form of a code symbol such as a barcode. At the shopper-selected settlement apparatus 20, the shopper C2 causes the settlement apparatus 20 to read the code symbol (coded transaction number) using the fixed scanner 205 or the hand scanner 207. The settlement apparatus 20 after reading (coded) the transaction number, then notifies the commodity data registration apparatus 10 of the received transaction number. Thus, the commodity data registration apparatus 10 can identify the destination (i.e., the selection of a particular settlement apparatus 20) of the shopper C2.

Note that the configuration for specifying the selection/destination of the shopper C2 may be implemented as a part of the operations of the discriminating section 1506 or may be separately implemented as a part of the operations of the commodity data registration apparatus 10 and/or other apparatuses (the settlement apparatus 20, the store server, and the like).

The selecting section 1507 identifies one settlement apparatus 20 as a shopper-selected settlement apparatus 20 on the basis of a discrimination result of the discriminating section 1506. This shopper-selected settlement apparatus is then the transmission destination for the sales registration information from the commodity data registration apparatus 10. A method of identifying the selection of a settlement apparatus 20 is not particularly limited. It is possible to adopt various forms.

For example, the selecting section 1507 may display, on the display 104, a selection screen showing as options each settlement apparatuses 20 capable of executing the desired settlement method and an operation on the selection screen may be used to select a particular settlement apparatus 20. Specifically, if the discrimination result from the discriminating section 1506 indicates cash settlement has been selected by the shopper C2, the selecting section 1507 would display the three settlement apparatuses 21 on the selection screen as options. If the electronic settlement has been selected, the selecting section 1507 would display the two settlement apparatuses 22 on the selection screen as options. If one settlement apparatus 20 is selected by the checker C1 from the selection screen, then selecting section 1507 selects the settlement apparatus 20 according to the selection of the checker C1.

The selecting section 1507 may also acquire operational states of each of the settlement apparatuses 20 and automatically select one settlement apparatus 20 on the basis of these operation states and shopper C2's settlement method selection. When settlement method is determined according to shopper C2 movement to a particular settlement apparatus 20, the selecting section 1507 specifies the settlement apparatus 20 at shopper C2's destination as the selected settlement apparatus 20.

The display control section 1508 displays transaction details, a total amount, and the like for the commodities registered by the registering section 1504 on the display 104 and the customer-side display 107. The display control section 1508 may also display the settlement apparatus 20 specified by the selecting section 1507 on the display 104 and the customer-side display 107 to indicate the shopper C2 is move to a particular settlement apparatus 20. Note that, when the settlement method is determined after the shopper C2 moves to the settlement apparatus 20, the settlement apparatus 20 at the moving destination will be undecided when registration at commodity data registration apparatus 10. Therefore, the display to the shopper C2 of a moving destination would not be performed.

The transmitting section 1509 sends sales registration information including the registered sales data, the calculated total amount, and the transaction number to the settlement apparatus 20 selected by the selecting section 1507. Specifically, the transmitting section 1509 sends the sales registration information via the communication control section 1501. Note that the sales registration information may be directly transmitted from the commodity data registration apparatus 10 to the settlement apparatus 20 or may be transmitted to the settlement apparatus 20 via another route, such as through the store server.

Timing at which the transmitting section 1509 transmits the sales registration information to the settlement apparatus 20 does not particularly matter. For example, if the settlement apparatus 20 selection is determined at the time of registration completion, the transmitting section 1509 may transmit the sales registration information upon registration completion. Alternatively, the transmitting section 1509 may transmit the sales registration information when a transaction number corresponding to the sales registration information is received from one of the settlement apparatuses 20.

The communication control section 2501 of the settlement apparatus 20 controls communication with the commodity data registration apparatus 10 that is connected by the network NT via the communication I/F 254.

The settling section 2502 executes the settlement processing on the basis of the sales registration information transmitted from the commodity data registration apparatus 10. More specifically, the settling section 2502 of the settlement apparatus 21 executes the settlement processing by cash (cash settlement method) on the basis of the total amount included in the sales registration information and cash (bills and coins) deposited into the money depositing port 2041 by shopper C2. The settling section 2502 of the settlement apparatus 22 executes the settlement processing (electronic settlement method) on the basis of the total amount included in the sales registration information and the electronic settlement information read from the card-type medium using the card reader writer 208.

An example of a procedure related to commodity purchase in the checkout system 1 is explained below.

First, the shopper C2 puts the commodities to be purchased in a basket and carries the commodities to the work table 30. The checker C1 inputs commodity codes into the commodity data registration apparatus 10 by causing the scanner 101 to read code symbols of the commodities to be purchased. The checker C1 then confirms a settlement method selection with the shopper C2 and inputs the confirmed settlement method selection to the commodity data registration apparatus 10 via the touch panel 103 or the keys 105.

The commodity data registration apparatus 10 identifies the commodities being purchased on the basis of the commodity codes and then registers sales data for these commodities. When registration for one sales transaction is completed, the commodity data registration apparatus 10 selects one of the settlement apparatuses 20 capable of executing the settlement method desired by the shopper C2 and transmits the sales registration information to the settlement apparatus 20. The checker C1 puts the now registered commodities in a basket and indicates the selected settlement apparatus 20 as the next destination for the shopper C2.

Thereafter, the shopper C2 carries the registered commodities to the indicated settlement apparatus 20 for settlement of the sales transaction. In the checkout system 1, since the settlement apparatuses 21 and the settlement apparatuses 22 are provided in the different areas, the shopper C2 moves to the area corresponding to the desired settlement method.

For example, a shopper C2 desiring cash settlement moves to the area A11 and carries the basket to a settlement apparatus 21 indicated by the checker C1. If a preceding shopper C2 is still performing settlement processing at the indicated settlement apparatus 21, the present shopper C2 stands in line to wait for completion of settlement processing by the preceding shopper C2 in the area A11. A shopper C2 desiring the electronic settlement moves to the area A12 and carries the basket to a settlement apparatus 22 indicated by the checker C1. If a preceding shopper C2 is still performing settlement processing at the indicated settlement apparatus 22, the present shopper C2 stands in line to wait for completion of the preceding shopper C2 in the area A12.

The present shopper C2 then executes settlement processing in the settlement apparatus 20 using the desired settlement method. When the settlement processing is completed, the shopper C2 puts the commodities in a bag or the like for takeaway and exits the area A1.

As explained above, in the checkout system 1, for each of the possible settlement methods, a different settlement apparatus 20 is provided. Consequently, it is possible to separate the shoppers C2 performing cash settlement from the shoppers C2 performing electronic settlement. Therefore, it is possible to achieve smoothing of the settlement processing.

For example, a shopper C2 performing cash settlement performs work for taking out cash from a wallet and work for, for example, depositing cash and collecting change. Therefore, a dwell time at the settlement apparatus 20 tends to increase. Therefore, in a situation in which a shopper C2 performing cash settlement and a shopper C2 performing electronic settlement share the same settlement apparatus 20, the shopper C2 performing the electronic settlement may be delayed by the shopper C2 performing the cash settlement. Therefore, it is likely that a waiting time increases.

On the other hand, in the checkout system 1 according to this first embodiment, a shopper C2 performing the electronic settlement is not affected by a shopper C2 performing the cash settlement. Therefore, it is possible to more smoothly finish the settlement processing. Furthermore, it is possible to achieve a reduction in an overall waiting time even if a waiting line for the settlement processing must be formed. It is also possible to exhibit the speed advantage of the electronic settlement method over cash settlement. Therefore, it is possible to urge the adoption of the electronic settlement.

In the checkout system 1 in this first embodiment, in the area A1, the settlement apparatuses 20 are respectively set in the areas A11 and A12, which have be specifically designated for the particular settlement methods. Consequently, it is possible to collect the shoppers C2 waiting for the settlement processing according to their desired settlement method in these designated areas (A11/A12). Therefore, it is possible to efficiently separate the shoppers C2 performing cash settlement from the shoppers C2 performing electronic settlement.

### Second Embodiment

A second embodiment is explained. Note that in the following description, the components that are substantially the same as the components in the first embodiment are denoted with the same reference numerals and signs and explanation of these repeated components may be omitted.

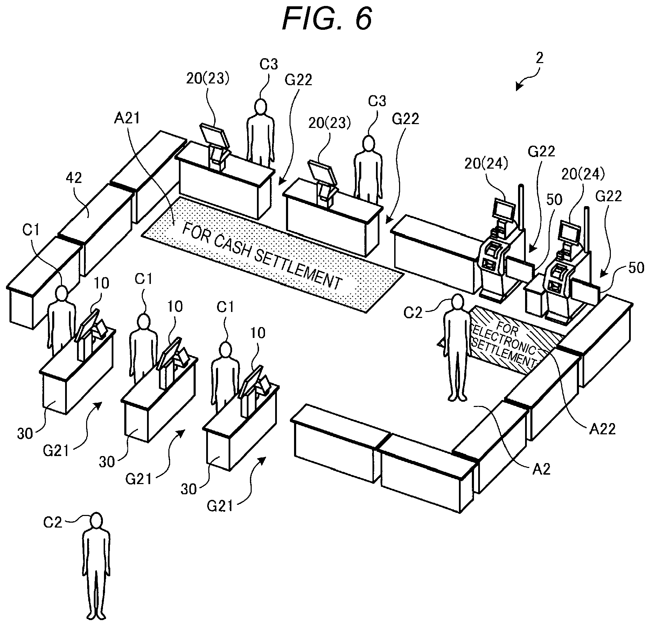

FIG. 6 is a diagram schematically showing an example of the configuration of a checkout system 2 according to the second embodiment. The checkout system 2 is provided in an area A2 of a store where checkout of commodities is performed.

Sacker tables 42 functioning as partitioning members are set on the periphery of the area A2. It is possible to enter the area A2 through gates G21 and exit via gates G22. That is, the area A2 is substantially partitioned from the other areas of the store by the sacker tables 42. The sacker tables 42 can be used as work tables on which commodities for which sales registration has been finished can be placed for bagging for takeaway in a bag such as a register bag provided by a store or a bag provided by the shopper C2. Note that, in FIG. 6, the area A2 is rectangular. However, the shape of the area A2 is not limited to this.

The checkout system 2 includes the commodity data registration apparatuses 10 operated by the checkers C1 (e.g., store clerks), settlement apparatuses 23 operated by the cashiers C3 (e.g., store clerks), and settlement apparatuses 24 operated by the shoppers C2.

The commodity data registration apparatuses 10 are set on the work tables 30 having a rectangular shape. The work tables 30 are set on the outer edge part of the area A2. As in the configuration shown in FIG. 1, the work tables 30 form the gates G21 for entering the area A2.

The settlement apparatuses 23 are set on a part of the sacker tables 42 on the periphery of the area A2. In the sacker tables 42 on which the settlement apparatuses 23 are set, passages are provided between the sacker tables 42 adjacent to one another. The passages function as the gates G22 (for exiting from the area A2.

The settlement apparatus 23 is a settlement apparatus 20 for cash settlement. For example, the settlement apparatus 23 has an apparatus configuration similar to the commodity data registration apparatus 10 explained above with reference to FIG. 2. The settlement apparatus 23 includes components configured for cash settlement such as a cash drawer that stores cash.

The settlement apparatuses 24 are set on the outer edge of the area A2. That is, the settlement apparatuses 24, in conjunction with the sacker tables 42, partition the area A2 from other areas. Gaps for allowing people to pass are provided among the sacker tables 42 and the settlement apparatuses 24 adjacent to one another. These gaps function as the gates G22 for exiting from the area A2.

The settlement apparatus 24 is a settlement apparatus 20 for electronic settlement. For example, the settlement apparatus 24 has an apparatus configuration similar to the settlement apparatus 20 explained above with reference to FIG. 3. The settlement apparatus 24 further includes a swing door 50 for opening and closing the gate G22.

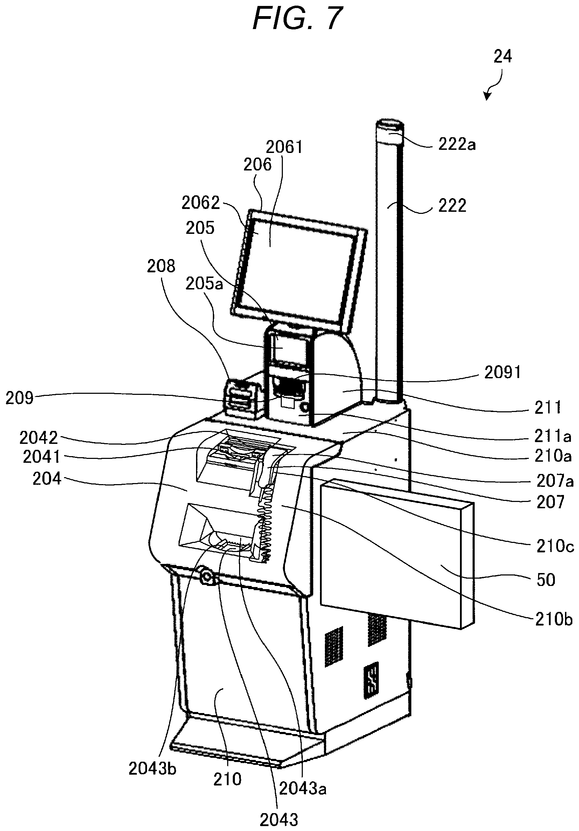

FIG. 7 is a perspective view showing an example of the exterior of a settlement apparatus 24. As shown in FIG. 7, the settlement apparatus 24 includes a depositing and dispensing section 204, a fixed scanner 205, a display operation panel 206, a hand-held scanner 207, a card reader writer 208, a printer 209, a first housing 210, and a second housing 211. The first housing 210 incorporates the information processing apparatus 202 that collectively controls the operations of the settlement apparatus 24.

The settlement apparatus 24 includes, instead of the basket placing table 221 (shown in FIG. 3), a swing door 50 for opening and closing the gate G22 on one side of the first housing 210. If the settlement processing (the electronic settlement) of the shopper C2 is completed, then the information processing apparatus 202 of the settlement apparatus 24 unlocks the swing door 50, opens the swing door 50 to the rear of the settlement apparatus 24, and allows the shopper C2 to pass. Note that a mechanism related to the opening and closing of the swing door 50 does not particularly matter. It is possible to use any known technique.

The settlement apparatuses 23 and the settlement apparatuses 24 are respectively set in areas designated for each of settlement method. Specifically, the settlement apparatuses 23 are set in an area A21. The settlement apparatuses 24 are set in an area A22. It is desirable that, for example, as shown in FIG. 6, the area A21 and the area A22 can be identified by distinguishing floor surfaces by colors or displaying guide messages on the floor surfaces or the like. Note that, in FIG. 6, an example is shown in which four settlement apparatuses 20 (two settlement apparatuses 23 and two settlement apparatuses 24) are provided. However, the total number of settlement apparatuses 20 and the ratio of the settlement apparatuses 23 to the settlement apparatuses 24 are not limited to this.

In the configuration of the checkout system 2, a set of the commodity data registration apparatus 10 and the settlement apparatuses 23 provides a checkout system of a two-person type. Specifically, registration of sales transaction information is performed by the checker C1 on the commodity data registration apparatus 10, then transmitted to one of the settlement apparatuses 23. The cashier C3 performs settlement processing on a settlement apparatus 23. A set of the commodity data registration apparatus 10 and the settlement apparatuses 24 provides a checkout system of a semi-self-service type. Specifically, registration of sales transaction information is performed by the checker C1 on a commodity data registration apparatus 10, then transmitted to one of the settlement apparatuses 24. The shopper C2 personally performs settlement processing on the settlement apparatus 24.

An example of a procedure related to commodity purchase in the checkout system 2 is explained below. First, the shopper C2 puts commodities to be purchased in a basket and carries the commodities to a work table 30.

The checker C1 inputs commodity codes into the commodity data registration apparatus 10 by causing the scanner 101 to read code symbols on the commodities being purchased. The checker C1 confirms a settlement method with the shopper C2 and inputs the confirmed settlement method into the commodity data registration apparatus 10 via the touch panel 103 or the keys 105.

The commodity data registration apparatus 10 specifies the commodities being purchased on the basis of the commodity codes and registers corresponding sales data for the commodities. When registration is completed, the commodity data registration apparatus 10 selects a settlement apparatus 20 that is capable of executing the settlement method type desired by the shopper C2 and then transmits the sales registration information to the selected settlement apparatus 20. The checker C1 puts the now registered commodities in a basket and indicates the just selected settlement apparatus 20 to the shopper C2.

After completion of the sales registration, the shopper C2 carries the basket with the registered commodities to the sacker table 42, and puts these commodities again in a bag for takeaway. A shopper C2 performing the cash settlement may also perform cash settlement related work at this time, for example, by taking out money to be tender for settlement from a wallet while the basket and bag(s) are on the sacker table 42.

Thereafter, the shopper C2 carries the commodities to the settlement apparatus 20 previously indicated as the destination in order to perform settlement of the sales transaction. In the checkout system 2, the shopper C2 moves to the area of the desired settlement method since the settlement apparatuses 23 and the settlement apparatuses 24 are provided in the different areas.

For example, the shopper C2 desiring cash settlement moves to the area A21 and carries the bag to the settlement apparatus 23 indicated by the checker C1. If a preceding shopper C2 is still performing the settlement processing at the settlement apparatus 23, the current shopper C2 stands in line to wait for settlement completion by the preceding shopper C2. For example, a shopper C2 desiring electronic settlement moves to the area A22 and carries the bag to the settlement apparatus 24 indicated by the checker C1. If a preceding shopper C2 is still performing settlement processing at the settlement apparatus 24, the current shopper C2 stands in line to wait for completion of the settlement processing by the preceding shopper C2.

The shopper C2 executes the settlement processing on the settlement apparatus 20 for the desired settlement method. When the settlement processing is completed, the shopper C2 exits the area A2.

As explained above, in the checkout system 2, a different settlement apparatus 20 is provided for the different settlement methods. Consequently, it is possible to separate the shoppers C2 performing cash settlement from the shoppers C2 performing electronic settlement. Therefore, it is thus possible to achieve smoothing of the settlement processing.

In the checkout system 2, the sacker tables 42 are set in the area A2. Consequently, the shopper C2 have a space to bag the commodities for takeaway and also prepare for performing the cash settlement related work on the settlement apparatus 20. A shopper C2 can utilize any time available before the beginning of the settlement process. Therefore, it is possible to achieve smoothing of the settlement processing and the work that might otherwise be required to be performed after the settlement processing was completed (e.g., the work of bagging commodities for takeaway).

In the checkout system 2, since the sacker tables 42 are disposed around the area A2, for example, it is possible to perform bagging for takeaway from both the inside and the outside of the area A2. For example, if a family member of a shopper C2 inside area A2 is present outside the area A2, the shopper C2 and family member can both perform the bagging in cooperation with each other across the sacker table 42.

The example embodiments are explained above. However, these embodiments are presented as an example and are not intended to limit the scope of the disclosure. Indeed, embodiments of the present disclosure can be implemented in various other forms. Various omissions, replacements, and changes to the example embodiments can be performed without departing from the scope of the present disclosure. These variations and modifications of the embodiments are included in the scope of the present disclosure.

For example, in the example embodiments, different settlement apparatuses 20 are provided only for cash settlement and electronic settlement; however, other or additional settlement methods may be adopted.

## Claims

1. A checkout system, comprising:
a registration apparatus for registering items in a sales transaction;
a first settlement apparatus through which settlement processing of a first type can be performed for items registered in the sales transaction by the registration apparatus; and
a second settlement apparatus through which settlement processing of a second type can be performed for items registered in the sales transaction by the registration apparatus, wherein
the registration apparatus is configured to:
designate a settlement method type for the sales transaction as one of the first type or second type, and
transmit sales transaction information to the first or second settlement apparatus according to the designated settlement method type.

2. The checkout system according to claim 1, wherein the registration apparatus is placed at an entrance to a first area in which the first settlement apparatus and the second settlement apparatus are disposed.

3. The checkout system according to claim 2, wherein
the first settlement apparatus is disposed in a first region of the first area,
the second settlement apparatus is disposed in a second region of the first area, and
the first and second regions of the first area are distinguished from each other by at least one of signage or color scheme.

4. The checkout system according to claim 3, wherein a floor of the first area in the first region has a color that is different from a color of the floor in the second region.

5. The checkout system according to claim 2, wherein the first settlement apparatus and the second settlement apparatus are each disposed at an exit of the first area.

6. The checkout system according to claim 5, wherein the first settlement apparatus includes a gate apparatus which opens with completion of settlement processing.

7. The checkout system according to any one of claims 1 to 6, wherein
the first type of the settlement method is cash payment, and
the second type of the settlement method is electronic payment.

8. The checkout system according to any one of claims 1 to 7, wherein one of the first and the second settlement apparatus is a customer-operated settlement apparatus and the other one of the first and the second settlement apparatus is a clerk-operated settlement apparatus.

9. A sales registration apparatus for use in a checkout system with multiple settlement options, comprising:
a clerk-operable sales transaction register;
a communication interface connectable to at least one settlement apparatus in the checkout system; and
a settlement-type designation device configured to accept an input designating a settlement type for settling a sales transaction recorded by the clerk-operable sales transaction register, wherein
the clerk-operable sales transaction register is configured to transmit, via the communication interface, information for settling the sales transaction to one of the first settlement apparatus or the second settlement apparatus according to the input designating the settlement type.

10. The sales registration apparatus according to claim 9, wherein the settlement-type designation device includes a touch panel that faces a customer standing area at the clerk-operable transaction register.

11. The sales registration apparatus according to claim 9 or 10, wherein the settlement-type designation device includes a button or key on the clerk-operable sales transaction register that is operable by a clerk at the clerk-operable sales transaction register.

12. A checkout system, comprising:
a sales transaction register apparatus according to claim 9;
a first settlement apparatus configured to accept cash payment for sales transaction settlement;
a second settlement apparatus configured to accept electronic payment for sales transaction settlement; and
a communication network connecting the sales transaction register apparatus to the first settlement apparatus and the second settlement apparatus, wherein
the sales transaction register apparatus is in a first area of a retail store, the first settlement apparatus is in a first region of the first area, and the second settlement apparatus is in a second region of the first area that is distinguished from the first region.

13. The checkout system according to claim 12, wherein
the first area is at least partially separated from other areas of the retail site by customer bagging tables.

14. The checkout system according to claim 12 or 13, further comprising a first plurality of settlement apparatuses configured to accept cash payment and a second plurality of settlement apparatuses configured to accept electronic payment, each settlement apparatus in the first and second pluralities being connected to the sales transaction register apparatus via the communication network.

15. A checkout system, comprising:
a plurality of sales transaction register apparatuses according to claim 9;
a first plurality of settlement apparatuses of a first type configured to accept cash payment for sales transaction settlement;
a second plurality of settlement apparatuses of a second type configured to accept electronic payment for sales transaction settlement; and
a communication network connecting the plurality of sales transaction register apparatuses to the first plurality of settlement apparatuses, and the second plurality of settlement apparatuses, wherein
the plurality of sales transaction register apparatuses is in a first area of a retail store, the first plurality of settlement apparatuses is in a first region of the first area, and the second plurality of settlement apparatuses is in a second region of the first area distinguished from the first region by at least one of signage or color.
